Europäisches Patentamt

(19) European Patent Office

Office européen des brevets

(11) Numéro de publication: **0 278 862**
**A2**

## (12) DEMANDE DE BREVET EUROPEEN

(21) Numéro de dépôt: 88400269.2

(22) Date de dépôt: 05.02.88

(51) Int. Cl.⁴: **C 04 B 22/14**
C 04 B 28/14
//(C04B28/14,18:08,22:14)

(30) Priorité: **09.02.87 FR 8701517**

(43) Date de publication de la demande:
**17.08.88 Bulletin 88/33**

(84) Etats contractants désignés: **BE DE LU**

(71) Demandeur: **S T A M**
**Rue Wilson**
**F-57300 Hagondange (FR)**

(72) Inventeur: **Bold, Jörg**
**Dürerstrasse 12**
**D-6750 Kaiserslautem (DE)**

**Klatt, Martine**
**30 chemin de la Petite Ile**
**F-57000 Metz (FR)**

(74) Mandataire: **CABINET BONNET-THIRION**
**95 Boulevard Beaumarchais**
**F-75003 Paris (FR)**

(54) Catalyseur sulfatique de prise de mortiers d'anhydrite pour soutènements miniers, et mortier contenant ce catalyseur.

(57) Le catalyseur de prise de mortiers d'anhydrite utilisés en soutènement dans les mines est constitué d'un mélange comprenant, en proportions pondérales :

3 à 15 % de sulfate de fer (II) ;

3 à 15 % de sulfate d'aluminium, la quantité de sulfate d'aluminium étant au plus égale à celle du sulfate de fer (II) ;

30 à 60 % de sulfates de métaux alcalins, potassium et sodium, le poids du sulfate de sodium, lorsque ce sel est présent, n'excédant pas celui du sulfate de potassium ;

10 à 40 % d'additif, soit sulfate de calcium hydraté, soit cendres volantes.

Les sulfates de fer (II) et d'aluminium sont comptés respectivement dans leurs formes hepta et octodécahydratées. Ils peuvent avantageusement être mis dans le mélange après calcination à un état d'hydratation respectivement de 2-4 et 0-5.

Les catalyseurs confèrent aux mortiers d'anhydrite des résistances à la compression supérieures à 3 $N/mm^2$ à cinq heures et 15,5 $N/mm^2$ à 24 heures, et comportent, par rapport à l'état de la technique, des quantités très réduites de sulfate ferreux dont la nocivité n'est pas nulle en milieu de fond minier.

EP 0 278 862 A2

## Description

Catalyseur sulfatique de prise de mortiers d'anhydrite pour soutènements miniers, et mortier contenant ce catalyseur

L'invention se rapporte à un catalyseur de prise de mortiers d'anhydrite utilisés en soutènement dans les mines, comprenant des sulfates solubles de métaux de valence 1 à 3 et des additifs sensiblement insolubles.

L'utilisation d'anhydrite naturelle dans des mortiers projetés à la lance pour exécuter des soutènements dans les mines a fait l'objet de nombreuses publications. A ce jour, ce matériau semble présenter le maximum d'avantages sous les aspects de l'efficacité et de la vitesse de prise, et du faible coût.

La vitesse de prise, traduite en résistance à la compression après 5 et 24 heures, est sous la dépendance du catalyseur de prise utilisé.

L'état de la technique le plus proche de la présente invention, à la connaissance de la Demanderesse, est décrit dans les documents de brevet FR-A-957 812 déposé le 24 décembre 1947 au nom de J. V. Lefébure, et FR-A 2 574 070 déposé le 30 novembre 1984 par la Demanderesse sous le numéro 84 18270.

Le document FR-A-957 812 traite de l'utilisation de l'anhydrite pour la réalisation de pièces moulées destinées à la construction. Les résultats recherchés sont le temps de démoulage, l'absence d'altération de couleur et d'efflorescence à la surface des pièces.

Ce document préconise l'utilisation d'un mélange de sulfate de zinc, sulfate de potassium, sulfate d'aluminium et cendres volantes.

Par contraste, les résultats recherchés pour les soutènements miniers sont l'obtention d'une résistance convenable à la compression dans un délai court, l'aspect du matériau étant d'importance secondaire. En outre, il apparaît une exigence particulière aux travaux miniers, qui est la faible nocivité du catalyseur, compte tenu des quantités importantes de mortier mises en jeu, et des problèmes d'aération des travaux au fond. Bien entendu, le prix de revient du catalyseur est à prendre en considération. Du point de vue nocivité et prix de revient, le sulfate de zinc est à déconseiller.

Le document FR-A-2 574 070 décrit un catalyseur qui comporte de 75 à 85 % d'un mélange de sulfates cristallisés et 25 à 15 % de centres volantes, le mélange de sulfates cristallisés comportant en poids de 48 à 52 % de sulfate de fer (II) heptahydraté et au moins 38 % de sulfate de potassium. Ce catalyseur est desiné aux travaux miniers et est efficace pour l'obtention rapide d'une résistance à la compression convenable.

Toutefois il est apparu souhaitable de réduire la nocivité du catalyseur due à la présence en quantité relativement importante de sulfate de fer (II).

Pour donner un ordre de grandeur des tonnages mis en oeuvre, on rappelle que dans la région de Lorraine-Sarre, une mine d'anhydrite produit annuellement environ 300 000 tonnes d'anhydrite pour travaux miniers. A la dose de 1 % en poids le catalyseur représente environ 3 000 tonnes/an. Si le catalyseur comprend 40 % de sulfate de fer (II), c'est une quantité d'environ 1 200 tonnes de sulfate ferreux qui est utilisée.

La Demanderesse a considéré comme souhaitable de réduire la quantité de sulfate ferreux à près du tiers de la quantité actuellement utilisée.

A cet effet, l'invention propose un catalyseur de prise de mortiers d'anhydrite utilisés en soutènement dans les mines, comprenant des sulfates solubles de métaux de valence 1 à 3, et des additifs sensiblement insolubles, caractérisé en ce qu'il est constitué d'un mélange comprenant en proportions pondérales :

3 à 15 % de sulfate de fer (II) ;

3 à 15 % de sulfate d'aluminium, la quantité de sulfate d'aluminium étant au plus égale à celle de sulfate de fer (II) ;

30 à 60 % de sulfates de métaux alcalins, potassium et sodium, le poids du sulfate de sodium, lorsque ce sel est présent, étant au plus égal à celui du sulfate de potassium;

10 à 40 % d'additif, soit sulfate de calcium hémihydraté, soit cendres volantes ;

les poids de sulfate de fer (II) et d'aluminium étant exprimés respectivement dans leurs formes hepta et octodécahydratées.

Sous l'aspect de l'efficacité du catalyseur pour obtenir rapidement des résistances à la compression nécessaires, les exemples seront démonstratifs.

De préférence les sulfates de fer (II) d'aluminium et de sodium, si ce sel est présent, sont mis dans le mélange après déshydratation au moins partielle par calcination. On obtient ainsi un catalyseur qui a moins tendance à motter, en interaction avec les additifs, sulfate de calcium hémihydraté ou centres volantes. En outre la déshydratation réduit la tendance des sulfates hydratés à perdre leur eau d'hydratation aux températures et hygrométries élevées (supérieures à 35°C et 95 %) qui peuvent régner dans certaines parties des mines, l'eau d'hydratation libérée pouvant provoquer, soit une décomposition hydrolytique de composants du catalyseur, soit la formation de composés de type Jarosite (sulfate double de fer et de potassium).

Il est souhaitable, lorsqu'on utilise les cendres volantes (de centrales thermiques au charbon) que celles-ci contiennent moins de 3 % en poids de quartz, pour réduire les risques de silicose.

Une première composition préférée est constituée de :

45 à 60 % de sulfate de potassium ;

5 à 10 % de sulfate de fer (II) compté en forme heptahydratée, mais déshydraté à un état compris entre 4 et 2 ;

5 à 10 % de sulfate d'aluminium, compté en forme octodécahydratée, mais déshydraté à un état compris entre 4 et 2 ;

le complément à 100 % étant soit du sulfate de calcium hémihydraté, soit des cendres volantes, en quantité d'au moins 10 %.

Une seconde composition préférée est constituée de :

30 à 50 % de sulfate de potassium ;

5 à 25 % de sulfate de sodium déshydraté ;

3 à 10 % de sulfate de fer (II) ;

3 à 10 % de sulfate d'aluminium ;

ces sulfates de fer et d'aluminium étant mis dans le mélange dans les mêmes conditions que pour la première composition préférée.

Là encore le complément à 100 %, qui ne peut être inférieur à 10 %, est constitué soit par du sulfate de calcium hémihydraté, soit des cendres volantes.

De toute façon le catalyseur est ajouté au mortier à la dose pondérale de 0,6 à 1,2 % rapportée à l'anhydrite, la valeur moyenne étant de 1 %.

L'invention sera mieux comprise à la lumière de la description qui va suivre, assortie d'exemples.

Tous les essais ont été exécutés avec une anhydrite naturelle, de même origine et granulométrie que celle qui est utilisée dans un certain nombre de mines de la région Lorraine-Sarre.

Avec cette anhydrite, gâchée avec 8,5 % en poids d'eau et additionnée de 1 % du catalyseur d'essai, on a moulé des prismes normalisés de 4 cm x 4 cm x 16 cm. Les prismes étaient stockés à 20°C et 95 % d'humidité relative. La résistance à la compression a été mesurée après 5 heures et 24 heures.

Les exemples 1 à 4 se rapportent à des essais sur les composants individuels du catalyseur, avec 30 % en poids d'additif sulfate de calcium hémihydraté. Les exemples 5 et 8 représentent des essais de catalyseur réalisés pour préciser les limites de l'invention, qui sont en dehors de l'invention. L'exemple 12 correspond à un catalyseur selon FR-A-2 574 070, et l'exemple 13 à un catalyseur selon FR-A-957 812.

Pour les compositions, on garde les conventions précédentes, c'est-à-dire que les pourcentages pondéraux de sulfates de fer et d'aluminium sont déterminés pour les sulfates cristallisés à respectivement 7 et 18 molécules d'eau, tandis que, dans le mélange, ces sulfates on été ramenés par calcination à des états d'hydratation 2 à 4 pour le sulfate de fer (II) et 0 à 5 pour le sulfate d'aluminium.

On notera que la déshydratation influe sur la conservation du catalyseur, mais non sur son efficacité catalytique s'il n s'est pas altéré.

Le tableau I présente les résultats d'essais des exemples 1 à 13.

0 278 862

## TABLEAU I

| N° essai | Composition % en poids | | | | | | Résistance N/mm$^2$ | | Nombre d'essais |
|---|---|---|---|---|---|---|---|---|---|
| | K$_2$SO$_4$ | Na$_2$SO$_4$ | FeSO$_4$ n H$_2$O | Al$_2$(SO$_4$)$_3$ n H$_2$O | CaSO$_4$ 1/2 H$_2$O | Cendres volantes | 5 h | 24 h | |
| 1 | 70 | – | – | – | 30 | – | 0 | 4 | 3 |
| 2 | – | 70 | – | – | 30 | – | 0 | 2,3 | 3 |
| 3 | – | – | 70 | – | 30 | – | 0 | 9,3 | 3 |
| 4 | – | – | – | 70 | 30 | – | 0 | 5,2 | 3 |
| 5 | 40 | – | 30 | – | 30 | – | 3,7 | 11,0 | 2 |
| * 6 | 50 | – | 10 | 10 | 30 | – | 3,8 | 16,3 | 19 |
| * 7 | 50 | – | 10 | 10 | – | 30 | 3,7 | 16,8 | 6 |
| 8 | – | 50 | 10 | 10 | 30 | – | 0 | 13 | 3 |
| * 9 | 40 | 10 | 10 | 10 | – | 30 | 4,3 | 16,4 | 5 |
| * 10 | 50 | – | 5 | 5 | 40 | – | 4,0 | 15,5 | 2 |
| * 11 | 35 | 25 | 5 | 5 | 30 | – | 3,2 | 17 | 5 |
| 12 | 38,5 | – | 38,5 | – | 9 | 14 | 3,1 | 14,2 | 12 |
| 13 | 50 | – | 10 (ZnSO$_4$) | 10 | – | 30 | 2,9 | 16 | 3 |

* Catalyseur selon l'invention

Il est remarquable que les essais effectués avec les catalyseurs de l'invention confèrent à l'anhydrite une résistance à la compression à 5 heures supérieure à 3 N/mm², et généralement supérieure à 3,6 N/mm², et

4

**0 278 862**

une résistance à la compression à 24 heures supérieure à 15,5 N/mm², et généralement supérieure à 16, c'est-à-dire des résistances globalement supérieures à celles des anhydrites avec des catalyseurs de l'état de la technique.

Par ailleurs, on notera que la teneur en sulfate de fer (II) est très réduite par rapport au catalyseur selon FR-A-2 574 070.

Bien entendu l'invention n'est pas limitée aux exemples décrits mais en embrasse toutes les variantes d'exécution dans le cadre des revendications.

## Revendications

1. Catalyseur de prise de mortiers d'anhydrite utilisés en soutènement dans les mines, comprenant des sulfates solubles de métaux de valence 1 à 3, et des additifs sensiblement insolubles, caractérisé en ce qu'il est constitué d'un mélange comprenant en proportions pondérales :

3 à 15 % de sulfate de fer (II) ;

3 à 15 % de sulfate d'aluminium, la quantité de sulfate d'aluminium étant au plus égale à celle de sulfate de fer (II) ;

30 à 60 % de sulfates de métaux alcalins, potassium et sodium, le poids du sulfate de sodium, lorsque ce sel est présent, étant au plus égal à celui du sulfate de potassium;

10 à 40 % d'additif, soit sulfate de calcium hémihydraté, soit cendres volantes ;
les poids de sulfate de fer (II) et d'aluminium étant exprimés respectivement dans leurs formes hepta et octodécahydratées.

2. Catalyseur selon la revendication 1, caractérisé en ce que les sulfates de fer (II), d'aluminium et de sodium, si ce sel est présent, sont mis dans le mélange après déshydratation au moins partielle par calcination.

3. Catalyseur selon l'une des revendications 1 et 2, caractérisé en ce que les cendres volantes, lorsqu'elles sont présentes, contiennent moins de 3 % en poids de quartz.

4. Catalyseur selon une quelconque des revendications 1 à 3, caractérisé en ce qu'il comprend, en proportions pondérales :

de 45 à 60 % de sulfate de potassium ;

de 5 à 10 % de sulfate de fer (II) compté en forme heptahydratée et mis dans le mélange à une étant d'hydratation compris entre 4 et 2 ;

de 5 à 10 % de sulfate d'aluminium, compté en forme octodécahydratée et mis dans le mélange à un état d'hydratation compris entre 5 et 0.

5. Catalyseur selon une quelconque des revendications 1 à 3, caractérisé en ce qu'il comprend, en quantités pondérales :

de 30 à 50 % de sulfate de potassium ;

de 5 à 25 % de sulfate de sodium déshydraté ;

de 3 à 10 % de sulfate de fer (II) compté en forme heptahydratée et mis dans le mélange à un état d'hydratation compris entre 4 et 2 ;

de 3 à 10 % de sulfate d'aluminium, compté en forme octodécahydratée et mis dans le mélange à un état d'hydratation compris entre 5 et 0.

6. Mortier d'anhydrite comportant un catalyseur selon une quelconque des revendications 1 à 5, caractérisé en ce que la dose pondérale de catalyseur est comprise entre 0,6 et 1,2.